Europäisches Patentamt

European Patent Office

Office européen des brevets

(11) Veröffentlichungsnummer: **0 467 019 A1**

# EUROPÄISCHE PATENTANMELDUNG

(21) Anmeldenummer: **91105953.3**

(51) Int. Cl.5: **B28D 1/04**, B23D 45/10

(22) Anmeldetag: **15.04.91**

(30) Priorität: **20.07.90 DE 4023099**

(43) Veröffentlichungstag der Anmeldung:
**22.01.92 Patentblatt 92/04**

(84) Benannte Vertragsstaaten:
**AT BE CH DE DK ES FR GB GR IT LI LU NL SE**

(71) Anmelder: **EISENWERK HENSEL BAYREUTH Dipl.-Ing. BURKHARDT GmbH Postfach 5020**
**W-8580 Bayreuth 13(DE)**

(72) Erfinder: **Köstner,Franz dipl.-ing. Mozartstr.6 W-8580,Bayreuth,(DE)**

(74) Vertreter: **Kessel, Egbert, Dipl.-Ing. Patentanwälte Dipl.-Ing. E. Kessel Dipl.-Ing. V. Böhme Karolinenstrasse 27 W-8500 Nürnberg 1(DE)**

(54) **Einrichtung zum Trennen von Werkstücken aus sprödhartem Material.**

(57) Die Erfindung betrifft eine Einrichtung zum Trennen von Werkstücken (19) aus sprödhartem Material, die aus zwei im Abstand voneinander angeordneten Portalen (1,2) und einem diese verbindenden Tragbalken (3) besteht, der hintereinander in einer Ebene angeordnete, gleichstarke Kreissägeblätter (7a-7e) zunehmenden Durchmessers trägt, wobei die Werkstücke (19) von der mit dem Sägeblatt (7a) kleinsten Durchmessers bestückten Einlaufseite zu der mit dem Sägeblatt (7e) größten Durchmessers bestückten Auslaufseite bewegt und mit einem Trennschnitt zunehmender Tiefe versehen werden. Durch die Erfindung soll diese Einrichtung für Werkstücke unterschiedlicher Höhe einsatzfähig gemacht werden, ohne deshalb das Werkstück höher auflegen und/oder Kreissägeblätter ausbauen zu müssen. Das wird erfindungsgemäß dadurch erreicht, daß der Tragbalken (3) an seinem auslaufseitigen Ende in der Sägeblattebene schwenkbeweglich gelagert ist.

EP 0 467 019 A1

Fig. 1

Die Erfindung betrifft eine Einrichtung zum Trennen von Werkstücken aus sprödhartem Material wie Granit, Marmor, Keramik oder Glas, die aus zwei im Abstand voneinander angeordneten Portalen und einem diese verbindenden Tragbalken besteht, der hintereinander in einer Ebene angeordnete, gleichstarke Kreissägeblätter zunehmenden Durchmessers trägt, wobei die Werkstücke von der mit dem Sägeblatt kleinsten Durchmessers bestückten Einlaufseite zu der mit dem Sägeblatt größten Durchmessers bestückten Auslaufseite bewegt und mit einem Trennschnitt zunehmender Tiefe versehen werden.

Für das Trennen von sprödhartem Material, insbesondere Hartgestein, sind mehrere Verfahren bekannt, bei denen die unterschiedlichsten Trennwerkzeuge zum Einsatz kommen. Dabei ist das günstigste Verfahren stets dasjenige, bei dem sich die maximale Schnittleistung und der höchste Automatisierungsgrad mit den niedrigsten Kosten erzielen lassen.

Bei einem ersten bekannten Trennverfahren wird mit hin- und hergehendem Blatt gearbeitet; es handelt sich dabei um Sägegatter und Trennsägen. Bei diesem Trennverfahren lassen sich zwar die Kosten aufgrund der durch das schmale und dünne Trennwerkzeug bedingten geringen Werkzeugkosten niedrig halten, doch ist die Schnittleistung unbefriedigend.

Bei einem weiteren bekannten Trennverfahren wird mit einem umlaufenden Trennwerkzeug gearbeitet. Insoweit ist zunächst die mit Diamantsegmenten besetzte Seilsäge zu nennen, bei der es sich genau umgekehrt wie bei Sägegattern und Trennsägen verhält:

sie erbringt zwar eine gute Schnittleistung, doch verursacht sie aufgrund des sehr stark dimensionierten Trennwerkzeugs hohe Kosten. Darüber hinaus müssen die von einer Seilsäge erzeugten Trennflächen nachbearbeitet werden. - Ebenfalls mit umlaufendem Trennwerkzeug arbeitet die Bandsäge, die als Weiterentwicklung der Seilsäge anzusehen ist. Sie weist bei sehr guter Schnittleistung niedrige Werkzeugkosten auf, da die Dicke des Trennwerkzeugs recht klein gehalten werden kann, doch wirken sich der hohe Aufwand beim Werkzeugwechsel sowie der geringe Automatisierungsgrad ungünstig aus.

Als bestes der bekannten Trennverfahren gilt das Kreissägen, bei dem das Trennwerkzeug als eine mit Diamantsegmenten besetzte rotierende Kreisscheibe ausgebildet ist. Dieses Trennverfahren ist sehr anpassungsfähig; es lassen sich damit unter den verschiedensten Bedingungen gute Schnittleistungen bei hohem Automatisierungsgrad erreichen. Ein wesentlicher Nachteil des Kreissägens ist allerdings die erhebliche Dicke des Trennwerkzeugs. Da mit zunehmender Schnittiefe der Durchmesser des Kreissägeblatts ansteigt, muß wegen der geforderten Schnittgenauigkeit die Werkzeugdicke erhöht werden, um eine ausreichende Stabilität des großflächigen Kreissägeblatts zu gewährleisten. Dadurch steigen nicht nur die Werkzeugkosten, sondern auch die Antriebsleistung und die Aufwendung für die Beseitigung des Sägekleins. Zum Abtrennen dünner Platten vom Block hat das Kreissägen sich daher zunächst nicht durchzusetzen vermocht.

Weitere Schwierigkeiten ergeben sich bei der Anwendung des Kreissägens auf Hartgestein. Während Weichgestein wie Marmor oder Kalkstein im Vollschnitt kreisgesägt wird, muß das Trennen bei Hartgestein wie Granit oder Syenit stufenweise erfolgen: nach jedem Durchgang durch das Werkstück wird das Trennwerkzeug um 10 - 30 mm abgesenkt, bis das Werkstück durchtrennt ist. Der dabei auftretende zusätzliche Zeitbedarf für das Überfahren der Frontseiten des Werkstücks und das Absenken des Trennwerkzeugs wirken sich vor allem auf die Schnittleistung nachteilig aus. Zur Vermeidung dieser beiden wesentlichen Mängel des Kreissägens (große Werkzeugdicke bzw. Schnittbreite und stufenweise Absenkung des Trennwerkzeugs) ist die eingangs beschriebene Einrichtung gemäß DE-AS 27 21 941 bzw. DE-OS 31 39 428 bekannt geworden. Die etwa 10 - 15 hintereinander angeordneten Kreissägeblätter weisen gleiche Durchmessersprünge, bsp. 50 mm, auf, so daß sich für jedes Blatt eine gleiche Zunahme der Schnittiefe - bei dem gewählten Beispiel 25 mm - ergibt. Auf diese Weise läßt sich bei einem einzigen Durchgang des Werkstücks ein vollständiger Schnitt erzeugen, wobei das einlaufseitige Kreissägeblatt kleinsten Durchmessers, das nur eine vergleichsweise geringe Dicke benötigt, um in sich steif zu sein, eine Schnittfuge gräbt, in welche das nächstgrößere Kreissägeblatt eintaucht und deshalb beim Vertiefen der Schnittfuge in dieser geführt ist, was sich bei den folgenden Kreissägeblättern bis hin zum auslaufseitigen Kreissägeblatt größten Durchmessers, das die Durchtrennung des Werkstücks bewirkt, wiederholt. Durch die Führung der Kreissägeblätter größeren Durchmessers in der Schnittfuge kommen diese mit der gleichen Dicke wie das einlaufseitige Kreissägeblatt kleinsten Durchmessers aus, ohne daß dadurch die Schnittgenauigkeit leidet; die Schnittbreite ist somit optimiert. Das gilt auch für die sogenannte Maschinenhauptzeit, da wegen des Fortfalls der Umkehrvorgänge und des Absenkens des Trennwerkzeugs keine Leerzeiten mehr entstehen.

Gleichwohl haben auch diese bekannten, nach dem Kreissägeprinzip arbeitenden Trenneinrichtungen die Anforderungen der Praxis nicht zu befriedigen vermocht. So haftet ihnen vor allem der Nachteil an, daß sie jeweils nur auf eine ganz bestimmte Werkstückhöhe ausgelegt sein können, die durch das einlaufseitige Kreissägeblatt kleinsten Durchmessers und das auslaufseitige Kreissägeblatt größten Durchmessers bestimmt wird. Die Werkstückhöhe muß nämlich inbezug auf die beiden endseitigen Kreissägeblätter so abgestimmt sein, daß das kleinste und aufgrund seiner Dickenbemessung steife Kreissägeblatt auf der Oberseite des Werkstücks eine lagegenaue Führungsrille einfräst und das größte Kreissägeblatt nur knapp die Unterseite des aufliegenden Werkstücks durchtrennt. Bei Werkstücken geringerer Höhe würde nicht das kleinste steife Kreissägeblatt, sondern ein größeres Kreissägeblatt die Führungsrille einfräsen; da dieses größere, normalerweise im Schnitt geführte Kreissägeblatt jedoch keine ausreichende Steifigkeit besitzt, wären Abweichungen von der gewünschten Schnittrichtung die zwangsläufige Folge. Ein höheres Auflegen der niedrigeren Werkstücke würde zwar das Einfräsen der Führungsrille mit dem kleinsten Kreissägeblatt ermöglichen, doch würden dann die größten Kreissägeblätter die Unterlage durchsägen, weshalb sie ausgebaut werden müßten.

Der Erfindung liegt die Aufgabe zugrunde, die eingangs beschriebene bekannte Trenneinrichtung auch für Werkstücke unterschiedlicher Höhe einsatzfähig zu machen, ohne deshalb das Werkstück höher auflegen und/oder Kreissägeblätter ausbauen zu müssen. Das wird erfindungsgemäß dadurch erreicht, daß der Tragbalken an seinem auslaufseitigen Ende in der Sägeblattebene schwenkbeweglich gelagert ist. Aufgrund dieser Ausgestaltung kann das kleinste Kreissägeblatt der jeweiligen Werkstückhöhe durch Verstellung seiner Höhenlage angepaßt werden, während das größte Kreissägeblatt seine Höhenlage im wesentlichen beibehält.

Eine genaue Beibehaltung der Höhenlage des größten Kreissägeblatts beim Verschwenken des Tragbalkens ist dann gegeben, wenn gemäß einer ersten Ausführungsform der Erfindung die Schwenkachse des Tragbalkens mit der Drehachse des Kreissägeblatts größten Durchmessers fluchtet. Bei einer zweiten Ausführungsform der Erfindung ist vorgesehen, daß die Schwenkachse des Tragbalkens lotrecht über der Drehachse des Kreissägeblatts größten Durchmessers angeordnet ist, was zwar beim Verschwenken des Tragbalkens zu einer geringfügigen Änderung der Höhenlage des Kreissägeblatts größten Durchmessers führt, jedoch die konstruktive Ausgestaltung vor allem der Schwenklagerung vereinfacht.

Gemäß einem weiteren Merkmal der Erfindung ist das einlaufseitige Ende des Tragbalkens in der Sägeblattebene höhenverstellbar. Insoweit hat es sich als vorteilhaft erwiesen, wenn das einlaufseitige Ende des Tragbalkens an dem Querträger des Portals längsverschieblich gehalten ist, der seinerseits in den vertikalen Säulen des Portals heb- und senkbar sowie um seine Längsachse drehbar gelagert ist.

In weiterer Ausgestaltung des Erfindungsgedankens ist die Schwenkachse des Tragbalkens an dessen auslaufseitigem Ende höhenverstellbar. Dadurch wird ein Trennen von Werkstücken ermöglicht, deren Höhe die bislang übliche Maximal-Werkstückhöhe von 460 mm übersteigt, und zwar bis hin zu 600 mm.

Da aus wirtschaftlichen Gründen eine Begrenzung der Kreissägeblattanzahl und der Schnittstufen erforderlich ist, beträgt die mit den bekannten Trenneinrichtungen erzielbare Schnittiefe ca. 460 mm. Werkstücke von geringerer Höhe bis hin zu 200 mm lassen sich nun erfindungsgemäß durch Absenken des kleinsten Kreissägeblatts bearbeiten, wobei sich die Schnittstufen der einzelnen Kreissägeblätter linear verringern, so daß mit höheren Vorschubgeschwindigkeiten gearbeitet werden kann. Schwierigkeiten bereiten jedoch Werkstücke, deren Höhe > 460 mm ist; dazu müßten auslaufseitig noch weitere Kreissägeblätter mit großen Durchmessern vorgesehen werden, was die Trenneinrichtung viel zu lang werden lassen würde.

Das zuletzt erwähnte erfindungsgemäße Merkmal, die Schwenkachse des Tragbalkens an dessen auslaufseitigem Ende höhenverstellbar zu machen, schafft die Möglichkeit, einen Schnitt von bsp. 600 mm Tiefe auf zwei hintereinander geschalteten Trenneinrichtungen herzustellen. Die erste Trenneinrichtung ist erfindungsgemäß ausgestaltet und wird auf eine Höhe von ca. 150 mm über die Arbeitstisch-Auflage gehoben (= Abstand des auslaufseitigen größten Kreissägeblatts von der Arbeitstisch-Auflage); in ihr wird das Werkstück also etwa zu 3/4, d.i. bis zu einer Schnittiefe von 450 mm, eingesägt. Von dort geht das Werkstück in die nachgeschaltete zweite Trenneinrichtung, welche die großen Kreissägeblätter (einlaufseitig 1 200 mm, auslaufseitig 1 600 mm Durchmesser) enthält und deshalb trotz geringerer Kreissägeblattanzahl die gleiche Länge wie die erste Trenneinrichtung besitzt. In dieser zweiten Trenneinrichtung, die keinen schwenkbaren Tragbalken aufweist, werden dann die restlichen 150 mm des Werkstücks durchgesägt.

In der Zeichnung ist ein bevorzugtes Ausführungsbeispiel der Erfindung dargestellt.

Es zeigen

Fig. 1 die Seitenansicht einer erfindungsgemäßen Trenneinrichtung,

Fig. 2 die Schnittansicht nach B - B in Fig. 1 und

Fig. 3 die Ansicht A gemäß Fig. 1.

Die Trenneinrichtung besteht im wesentlichen aus zwei im Abstand voneinander angeordneten Portalen 1 und 2 sowie einem von diesen gehaltenen Tragbalken 3. Auf der Oberseite des Tragbalkens 3 sind Motore 4a - 4e angeordnet, die über Antriebsmittel 5 mit Drehachsen bzw. Wellen 6a - 6e von Kreissägeblättern 7a - 7e getrieblich verbunden sind. Mit 8 ist eine Abdeckung bezeichnet, welche die obere Hälfte der Kreissägeblätter 7a - 7e und die an der Unterseite des Tragbalkens 3 ansitzende Lagerung 9 für die Wellen 6a - 6e verkleidet.

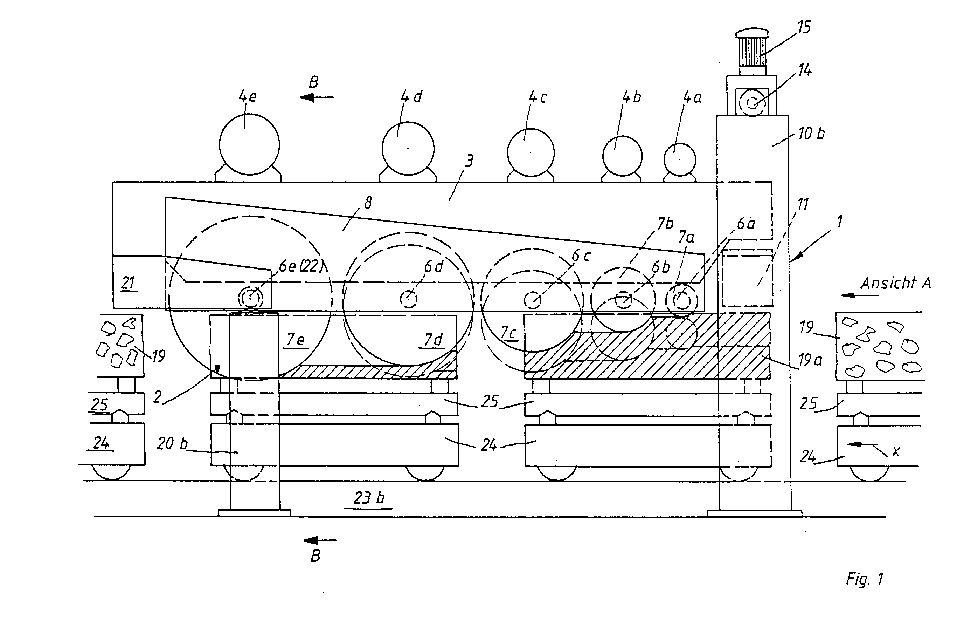

Die Wellen 6a - 6e liegen in einer Ebene. Dazu rechtwinklig verläuft die Ebene, in der sich in exakt fluchtender Hintereinander-Anordnung die Kreissägeblätter 7a - 7e befinden, deren Durchmesser in der Zeichnung (s. Fig. 1) von links nach rechts gleichmäßig zunimmt; ihre Dicke ist identisch.

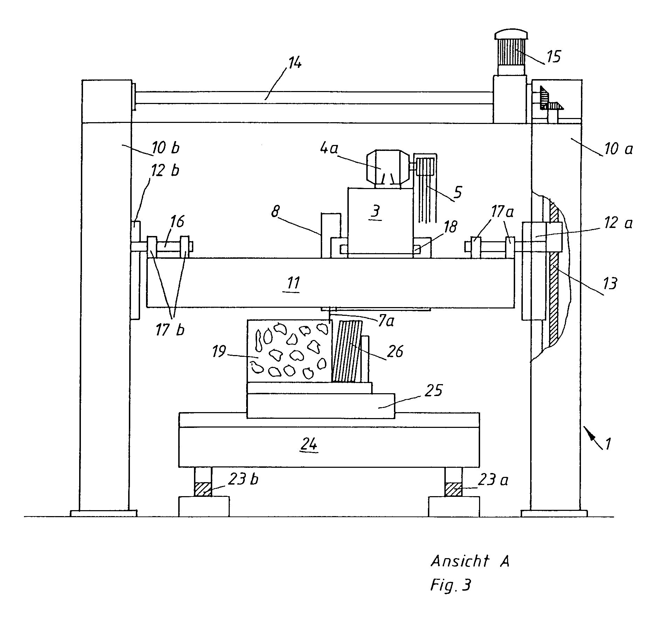

Das Portal 1 (s. Fig. 3) besteht aus zwei vertikalen Säulen 10a, 10b und einem horizontalen Querträger 11. Der Querträger 11 ist über Supporte 12a, 12b, die vertikale Schlitzführungen in den einander zugewandten Innenseiten der Säulen 10a, 10b durchdringen, auf in den Säulen 10a, 10b angeordneten Gewindespindeln 13 höhenverstellbar gehalten. Die beiden Gewindespindeln 13 sind durch eine horizontale Welle 14 getrieblich miteinander verbunden, die mittels eines Motors 15 antreibbar ist; auf diese Weise ist ein Gleichlauf der Gewindespindeln 13 gewährleistet.

Der Querträger 11 ist in den Supporten 12a, 12b um eine horizontale Achse 16 schwenkbar, die parallel zu seiner Längsachse verläuft und in Laschen 17a, 17b gelagert ist. Das Ende des Tragbalkens 3 ist auf dem Querträger 11 längsverschieblich gehalten, so daß der Tragbalken 3 bei einer Höhenverstellung des Querträgers 11 die dann zwischen diesen beiden Bauteilen erforderliche Relativbewegung ausführen kann. Das läßt sich auch dadurch erreichen, daß der Tragbalken 3 mit dem Querträger 11 über ein langsverschiebliches Drehgelenk gekuppelt ist, wie es in Fig. 3 bei 17 angedeutet ist.

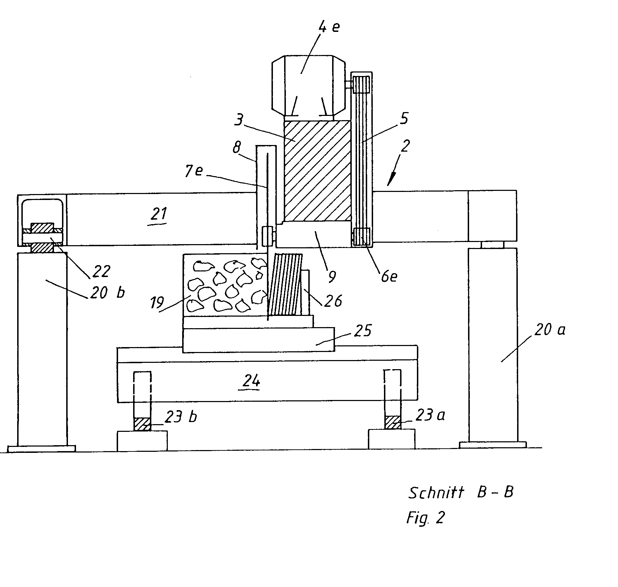

Das Portal 2 (s. Fig. 2) besteht aus den beiden vertikalen Säulen 20a, 20b und einem horizontalen Querträger 21, der auf den Säulen 20a, 20b schwenkbar gelagert ist. Dabei ist der das Auflager für das andere Ende des Tragbalkens 3 bildende mittlere Bereich des Querträgers 21 derart weit nach hinten (in der Zeichnung Fig. 1 nach links) abgekröpft, daß die Schwenkachse 22 mit der Drehachse der Welle 6e des größten Kreissägeblatts 7e zusammen-fällt.

Der Transport der Werkstücke 19 erfolgt bei dem dargestellten Ausführungsbeispiel mittels auf Schienen 23a, 23b verfahrbarer Schiebebühnen 24, auf denen das Werkstück 19 unter Zwischenschaltung eines quer zur Durchlaufrichtung verschiebbaren Arbeitstischs 25 aufruht. Mit 26 ist in den Fig. 2 und 3 ein Stapel abgetrennter Platten bezeichnet. Die Durchlaufrichtung der Schiebebühnen 24 ist in Fig. 1 durch einen Pfeil x angedeutet, so daß das Portal 1 auf der Einlaufseite und das Portal 2 auf der Auslaufseite der Trenneinrichtung liegt.

In Fig. 1 sind die Kreissägeblätter 7a - 7e in zwei Stellungen gezeigt, und zwar in einer ersten Stellung, in der ihre Wellen 6a - 6e in einer Horizontalebene liegen und ihr unterer sichtbarer Bereich in ausgezogenen Linien dargestellt ist, sowie in einer zweiten Stellung, in der ihre Wellen 6a - 6e durch Verschwenken des Tragbalkens 3 nach unten in einer zur Einlaufseite hin geneigten Ebene liegen und sie insgesamt strichliert dargestellt sind. In der ersten Stellung wird ein Werkstück 19 normaler Höhe bearbeitet, während in der zweiten Stellung ein Werkstück 19a geringerer Höhe - wiederum unter Einsatz aller Kreissägeblätter 7a - 7e, jedoch mit kleineren Schnittstufendurchtrennt wird.

Bezugszeichenliste

| | | |
|---|---|---|
| 1) | | |
| 2) | Portale | |
| 3 | Tragbalken | |
| 4a) | | |
| 4b) | | |
| 4c) | Motore | |
| 4d) | | |
| 4e) | | |
| 5 | Antriebsmittel | |
| 6a) | | |
| 6b) | | |
| 6c) | Wellen | |
| 6d) | | |
| 6e) | | |
| 7a) | | |
| 7b) | | |
| 7c) | Kreissägeblätter | |
| 7d) | | |
| 7e) | | |
| 8 | Abdeckung | |
| 9 | Lagerung | |
| 10a) | vertikale Säulen | |
| 10b) | | |
| 11 | Querträger | |
| 12a) | Supporte | |
| 12b) | | |
| 13 | Gewindespindel | |
| 14 | Welle | |
| 15 | Motor | |
| 16 | horizontale Achse | |
| 17a) | Laschen | |
| 17b) | | |
| 18 | Drehgelenk | |
| 19 | Werkstücke | |
| 19a) | | |
| 20a) | vertikale Säulen | |
| 20b) | | |
| 21 | Querträger | |
| 22 | Schwenkachse | |
| 23a) | Schienen | |
| 23b) | | |
| 24 | Schiebebühne | |
| 25 | Arbeitstisch | |
| 26 | Plattenstapel | |

**Patentansprüche**

1. Einrichtung zum Trennen von Werkstücken aus sprödhartem Material wie Granit, Marmor, Keramik oder Glas, die aus zwei im Abstand voneinander angeordneten Portalen und einem diese verbindenden Tragbalken besteht, der hintereinander in einer Ebene angeordnete, gleichstarke Kreissägeblätter zunehmenden Durchmessers trägt, wobei die Werkstücke von der mit dem Kreissägeblatt kleinsten Durchmessers bestückten Einlaufseite zu der mit dem Kreissägeblatt größten Durchmessers bestückten Auslaufseite bewegt und mit einem Trennschnitt zunehmender Tiefe versehen werden, **dadurch gekennzeichnet**, daß der Tragbalken (3) an seinem auslaufseitigen Ende in der Sägeblattebene schwenkbeweglich gelagert ist.

2. Einrichtung nach Anspruch 1, **dadurch gekennzeichnet**, daß die Schwenkachse (22) des Tragbalkens (3) mit der Drehachse (6e) des Kreissägeblatts (7e) größten Durchmessers fluchtet.

3. Einrichtung nach Anspruch 1, **dadurch gekennzeichnet**, daß die Schwenkachse (22) des Tragbalkens (3) lotrecht über der Drehachse (6e) des Kreissägeblatts (7e) größten Durchmessers angeordnet ist.

4. Einrichtung nach Anspruch 1 und einem der folgenden, **dadurch gekennzeichnet**, daß das einlaufseitige Ende des Tragbalkens (3) in der Sägeblattebene höhenverstellbar ist.

5. Einrichtung nach Anspruch 4, **dadurch gekennzeichnet**, daß das einlaufseitige Ende des Tragbalkens (3) an dem Querträger (11) des Portals (1) längsverschieblich gehalten ist.

6. Einrichtung nach Anspruch 5, **dadurch gekennzeichnet**, daß der Querträger (11) des Portals (1) in dessen vertikalen Säulen (10a, 10b) heb- und senkbar sowie um seine Längsachse drehbar gelagert ist.

7. Einrichtung nach Anspruch 1 und mindestens einem der folgenden, **dadurch gekennzeichnet**, daß die Schwenkachse (22) des Tragbalkens (3) an dessen auslaufseitigem Ende höhenverstellbar ist.

Fig. 1

EP 0 467 019 A1

Schnitt B – B

Fig. 2

Ansicht A
Fig. 3

## Europäisches Patentamt

# EUROPÄISCHER RECHERCHENBERICHT

Nummer der Anmeldung

# EP 91 10 5953

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.5) |
|---|---|---|---|
| D,Y | DE-A-3 139 428   (FAL AG)<br>* Seite 8, Zeile 21 - Seite 10, Zeile 8 * * * Abbildungen 1,2 * * | 1,4,7 | B 28 D 1/04<br>B 23 D 45/10 |
| A | | 2,3,5,6 | |
| | – – – | | |
| Y | US-A-1 327 923   (F.A. PHILLIPS)<br>* Seite 1, Zeile 84 - Seite 2, Zeile 17 * * * Seite 2, Zeile 45 - Zeile 58 * * * Abbildungen 1-7 * * | 1,4,7 | |
| A | | 2,3,5,6 | |
| | – – – | | |
| A | BE-A-468 337   (M. VAN TUYN)<br>* Seite 3, Zeile 3 - Zeile 24; Anspruch 3 * * * Abbildungen 1,2 * * | 1 | |
| | – – – | | |
| D,A | DE-A-2 721 941   (H. ISHIZUKA)<br>* das ganze Dokument * *<br>– – – – – | 1 | |

| RECHERCHIERTE SACHGEBIETE (Int. Cl.5) |
|---|
| B 28 D<br>B 23 D |

Der vorliegende Recherchenbericht wurde für alle Patentansprüche erstellt

| Recherchenort | Abschlußdatum der Recherche | Prüfer |
|---|---|---|
| Den Haag | 21 Oktober 91 | MOET H.J.K. |

**KATEGORIE DER GENANNTEN DOKUMENTE**

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur
T : der Erfindung zugrunde liegende Theorien oder Grundsätze

E : älteres Patentdokument, das jedoch erst am oder nach dem Anmeldedatum veröffentlicht worden ist
D : in der Anmeldung angeführtes Dokument
L : aus anderen Gründen angeführtes Dokument

--------------------------------------------------------------------

& : Mitglied der gleichen Patentfamilie, übereinstimmendes Dokument